# FASCICULE DE BREVET EUROPEEN

(11) **EP 1 451 236 B1**
(45) Date de publication et mention de la délivrance du brevet: **12.07.2006**
(21) Numéro de dépôt: 02777062.7
(22) Date de dépôt: 06.09.2002
(51) Int. Cl.: C08F 220/12, C08F 2/22, C09D 133/06

(54) **DISPERSION AQUEUSE DE POLYMERE A LESSIVABILITE ELEVEE, SA PREPARATION ET SON APPLICATION COMME LIANT DANS DES COMPOSITIONS DE REVETEMENT**
WÄSSRIGE POLYMERDISPERSION MIT ERHÖHTER AUSWASCHBARKEIT, DEREN HERSTELLUNG UND VERWENDUNG ALS BINDEMITTEL IN ÜBERZUGSSZUSAMMENSETZUNGEN
HIGH-WASHABILITY AQUEOUS POLYMER DISPERSION, PREPARATION AND USE THEREOF AS BINDER IN COATING COMPOSITIONS

(30) Priorité: 14.09.2001 EP 01000467
(43) Date de publication de la demande: 01.09.2004
(73) Titulaire: Cray Valley Kunstharze GmbH, 47918 Tönisvorst (DE)
(72) Inventeur: FONT PANADES, Carme, E-08192 Sant Quirze del Valles (ES); ALBALAT PEREZ, Jordi, E-08032 Barcelone (ES); ULLENBOOM, Werner, 47495 Rheinberg (DE)
(74) Mandataire: Chaillot, Geneviève
(86) Numéro de dépôt international: PCT/EP2002/010188
(87) Numéro de publication internationale: WO 2003/025032

(56) Documents cités:
- WO-A-94/21699
- US-A- 3 431 226

## Description

La présente invention porte sur une dispersion aqueuse de polymère (latex) de type purement acrylique ou acrylique-styrénique, qui possède un pouvoir liant vis-à-vis des charges élevé; sur un procédé spécifique permettant de préparer cette dispersion aqueuse de polymère ; ainsi que sur l'application de cette dernière comme liant dans des compositions de revêtement, notamment dans des formulations de peinture, en particulier dans des formulations de peinture sans solvant (ou agent coalescent), possédant une excellente lessivabilité malgré un faible taux de liant, concernant plus particulièrement des peintures de protection et/ou de décoration à usage externe et/ou interne sur des substrats comme les parois murales, le bois, les métaux ou les matières plastiques.

Lorsqu'une dispersion aqueuse de polymère est appliquée sur un substrat et après que l'eau se soit évaporée, il apparaît un film à la surface dudit substrat en raison de la coalescence du polymère présent dans l'émulsion. Il faut que cette filmification soit bonne pour obtenir un film homogène. Pour une bonne filmification, le caractère viscoélastique des particules de polymère est essentiel. En fait, les forces de coalescence doivent dépasser la résistance des particules à la déformation (fluage). Pour cette raison, on utilise traditionnellement, pour modifier la nature viscoélastique du polymère :
- des plastifiants qui accroissent l'élongation et l'élasticité ; et
- des solvants (appelés aussi agents de coalescence) qui sont des plastifiants "fugitifs" car ils facilitent la déformation élastique des particules du latex.

- Les plastifiants ont cependant des inconvénients : celui de réduire la force de rupture de la résine dans laquelle ils sont incorporés et celui de présenter une odeur caractéristique.
- Les solvants présentent les inconvénients d'être volatils, dangereux à manipuler et/ou toxiques, et leur emploi n'est pas favorable à la protection de l'environnement.

Par ailleurs, une caractéristique applicative de la bonne filmification d'un revêtement est la lessivabilité qui est l'aptitude à résister aux craquelures et au pelage dans un environnement aqueux tel que les conditions ordinaires d'usage. Il existe des méthodes normalisées de mesure de cette lessivabilité connues par l'homme du métier.

D'après l'état antérieur de la technique, il a déjà été essayé d'améliorer la lessivabilité des latex de type purement acrylique ou de type styrène-acrylique en incluant dans la structure du polymère de faibles quantités d'un monomère fonctionnel supplémentaire.

Différents monomères de ce type ont été proposés, par exemple des monomères tels que des acides carboxyliques C₅ à C₃₆ et leurs sels d'ammonium, amides, esters, aldéhydes et alcools (demande de brevet EP-A-252 526), des esters d'acide acétoacétique (demande de brevet DE-A-2 535 372), des dérivés de l'éthylène urée (brevet US-A-4 500 673), des produits de réaction de l'aminoéthyl-2-éthylène urée et d'alkylglycidyléther (brevet US-A-4 426 503), des produits de réaction d'aminoalkyl alkylène urée, de monoépoxydes saturés et de monoisocyanate fonctionnalisé méthacrylate (US-A-4526915), des dérivés d'imidazolidinone (demande internationale WO-A-91/12 243), le N-(2,2-diméthoxyéthyl) méthacrylamide (demande de brevet EP-A-337 873), des glycidyléthers (demande de brevet EP-A-69 326).

Cependant, cette solution n'est pas satisfaisante ou adéquate pour différentes raisons: ces monomères coûtent cher, ils sont toxiques et/ou dangereux, et ils n'apportent pas les performances exigées pour certaines applications, qui sont d'atteindre des valeurs de lessivabilité élevées pour des taux de liant les plus bas possibles, en l'absence d'agent coalescent.

La demande européenne antérieure EP-A-0 690 882 de la Société déposante qui représente l'état de la technique le plus proche de l'invention, décrit qu'une amélioration de la lessivabilité des peintures à base de latex du type purement acrylique ou acryliquè-styrénique peut être obtenue avec un nouveau latex préparé par une voie bien particulière, sans avoir recours à des plastifiants, à des agents de coalescence et aux monomères particuliers évoqués ci-dessus.

Le latex en question (EP-A-0 690 -882) est préparé à partir d'une composition de monomères comprenant :
- 60-100 parties en poids d'au moins un (méth)acrylate d' alkyle en C₁₋₁₂;
- 0-40 parties en poids d'au moins un monomère vinylaromatique ;
- 0-5 parties en poids d'au moins un acide mono- ou polycarboxylique α,β-insaturé à chaîne courte ; et
- 0-3 parties en poids d'au moins un amide α,β-insaturé à chaîne courte,
et obtenu par un procédé comprenant les deux étapes essentielles suivantes :
(1) dans une première étape, on introduit dans un réacteur 2 à 20% en poids de la composition des monomères et on conduit une prépolymérisation partielle en émulsion, pour obtenir une pré-émulsion ayant une taille moyenne de particules de polymères ne dépassant pas 95 nm (on contrôle donc cette taille de particule) ; et
(2) dans une deuxième étape, on conduit une polymérisation complète en émulsion de la composition restante des monomères ajoutée à ladite pré-émulsion partiellement polymérisée.

Un traitement de post-cuisson est aussi décrit dans ce document permettant avantageusement d'atteindre un taux de monomère résiduel ne dépassant pas 50 ppm.

De telles émulsions conduisent à une amélioration de la lessivabilité, mais le niveau de lessivabilité et plus particulièrement le rapport de lessivabilité sur le taux de liant engagé dans la composition de revêtement restaient encore insuffisants pour des applications plus spécifiques visées par la présente invention, mentionnées plus haut. Déjà l'absence d'agent coalescent additionné dans les compositions de revêtement visées, rend la filmification de la composition de latex plus difficile et, par ailleurs, pour certaines applications, la stabilité au stockage de ces compositions avant usage reste à améliorer, tout en gardant une lessivabilité élevée pour un faible taux de liant visé, qui en général ne dépasse pas 10% en poids exprimé en extrait sec de latex. L'absence de stabilité au stockage se manifeste essentiellement par une augmentation de la viscosité du latex, avec le temps de stockage, du fait de la floculation croissante des particules de latex.

Il existe également un besoin de formulations de peinture qui, à performances au moins égales, nécessitent moins de taux de liant.

Recherchant à résoudre ce problème et à éliminer les inconvénients associés, la Société déposante a découvert que l'introduction de 0,01 à 5% en poids par rapport au taux global final de monomères d'au moins un composé alpha, bêta-éthyléniquement insaturé comportant au moins un groupement carbonyle ayant au moins un atome d'hydrogène porté par un atome de carbone en position alpha dudit carbonyle, permettait non seulement de résoudre le problème posé, mais encore, d'une manière surprenante, d'améliorer encore la lessivabilité d'un facteur significatif d'au moins 2 (selon la norme DIN 53778).

La présente invention a donc pour premier objet une dispersion aqueuse de polymère, pour second objet un procédé spécifique de préparation de cette dispersion et pour troisième objet une composition de revêtement de protection et/ou de décoration comprenant cette dispersion comme liant pour des applications spécifiques.

Le premier objet concerne donc une dispersion aqueuse de polymère, préparée à partir d'une composition de monomères comprenant :
(A) 50 à 99,99 parties en poids d'au moins un ester acrylique ou méthacrylique dérivé d'acide acrylique ou méthacrylique et d'un alcool ayant 1 à 12 atomes de carbone ;
(B) 0 à 40 parties en poids d'au moins un monomère vinylaromatique ;
(C) 0 à 5 parties en poids d'au moins un acide mono- ou polycarboxylique α,β-insaturé à chaîne courte ; et
(D) 0,01 à 5 parties en poids d'au moins un composé (D) monomère alpha,bêta-éthyléniquement insaturé, comportant au moins un groupement carbonyle ayant au moins un atome d'hydrogène porté par un atome de carbone en position alpha dudit carbonyle,
pour 100 parties en poids des monomères (A) + (B) + (C) + (D),
avec 80 à 98 % en poids des composants monomères ayant été ajoutés à un milieu réactionnel contenant déjà une pré-émulsion partiellement ou complètement polymérisée représentant de 2 à 20 % en poids du taux global final des composants monomères dans la dispersion finalement obtenue.

La prépolymérisation est une prépolymérisation totale ou, de préférence, partielle, auquel cas elle est effectuée à une conversion d'au moins 50%, de préférence au moins 90% et jusqu'à moins de 100% de conversion, et en particulier à une conversion d'au moins 50% et de préférence au moins 90% de conversion, et jusqu'à une conversion de 98%.

En particulier, la dispersion aqueuse ne comporte aucun composant ou groupement fonctionnel susceptible de réagir avec les motifs issus dudit ou desdits composés (D) dans une réaction d'autoréticulation.

Parmi les composés (D), nous pouvons citer comme exemple les suivants : diacétone acrylamide (DAAM), diacétone méthacrylamide, 2-butanone (méth)acrylate, acétoacétate de vinyle, (méth)acrylate d'acétoacétoxyéthyle. Parmi les composés (D) les plus préférés, nous pouvons citer le diacétone acrylamide (DAAM) et le diacétone méthacrylamide selon la formule générale(I): 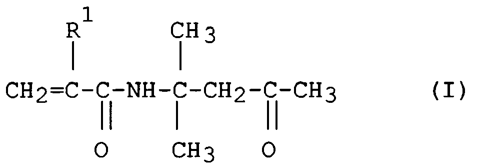 avec R¹: H ou méthyle

La présence de tels composés et, en particulier, du diacétone acrylamide dans des dispersions aqueuses de polymères est déjà décrite dans l'état antérieur de la technique, mais sa fonction d'agent de réticulation nécessite la présence supplémentaire forcée dans cette dispersion d'un deuxième agent qui réagit avec les motifs issus (par polymérisation) des composés carbonylés insaturés, la co-réticulation ayant lieu lors de la phase de filmification/formation du revêtement final (autoréticulation de la dispersion au séchage). Une telle réticulation est connue pour améliorer la résistance mécanique du film. De telles utilisations courantes du diacétone acrylamide sont décrites par exemple dans EP-A-1 029 006. Les co-agents de réticulation les plus courants avec des composés du type diacétone acrylamide sont des dérivés d'hydrazide (avec des acides carboxyliques). Les compositions aqueuses de polymère ou de revêtement qui en résultent et qui sont connues dans l'état antérieur de la technique, impliquent nécessairement la présence forcée avec les dérivés de type (D) d'agents de coréticulation du type dérivés d'hydrazide, amine ou époxy.

Conformément à un mode de réalisation particulier de la présente invention, la taille moyenne des particules de polymère présentes dans ladite pré-émulsion totalement ou partiellement polymérisée a été contrôlée pour ne pas dépasser 95 nm, en particulier pour ne pas dépasser 85 nm et, plus particulièrement, pour ne pas dépasser 65 nm.

Les méthodes de mesure et de contrôle de la taille moyenne des particules dans la pré-émulsion totalement ou partiellement polymérisée, avant que le flux principal des composants monomères, de préférence sous forme émulsifiée, soit mélangé avec elle (en au moins une étape), sont bien connues de l'homme du métier, par exemple par E.A. COLLINS, 18th Annual Short Course (Juin 1987) de l'Institut d'Emulsion des Polymères, Université Lehigh (Pennsylvanie), par E.A.COLLINS, J.A. DAVIDSON et C.A. DANIELS, J.Paint Technology 47, 35 (1975) et par les principes de fonctionnement de l'appareil AutoSizer Lo-C de MALVERN INSTRUMENTS .

L'homme du métier peut également contrôler que la taille moyenne des particules de polymère présentes dans la pré-émulsion totalement ou partiellement polymérisée n'excède pas 85 nm soit par la durée de polymérisation dudit flux partiel (2 à 20% en poids de la totalité des composants monomères) de pré-émulsion, qui devra de préférence ne pas dépasser environ 45 minutes ou bien par le taux global de conversion des monomères dans ledit flux partiel de pré-émulsion, qui doit atteindre au moins 50% et, de préférence au moins 90% en poids des monomères et jusqu'à moins de 100% et plus particulièrement jusqu'à une conversion de 98%.

Le type et les proportions des monomères mis en oeuvre selon la présente invention seront choisis, selon les connaissances générales de l'homme du métier de la polymérisation en émulsion, en vue de procurer un (co)polymère ayant une température de transition vitreuse d'au plus 10°C et/ou une température minimale de filmification d'au plus 5°C.

Conformément à la présente invention, le composant (D) représente avantageusement 0,1 à 2,5 parties en poids, en particulier 0,2 à 0,75 partie en poids, pour 1.00 parties en poids des monomères (A) + (B) + (C) + (D).

Le diacétone acrylamide et le diacétone méthacrylamide, représentés par la formule générale (I) ci-dessus, sont les composés (D) préférés pour la présente invention avec un taux de 0,01 à 5 %, plus particulièrement de 0,1 à 2,5%, et encore plus préférentiellement de 0,2 à 0,75% en poids, par rapport au taux global final de l'ensemble des monomères (A) + (B) + (C) + (D).

Comme esters (méth)acryliques (A) utilisables dans les compositions de monomères selon l'invention, on peut citer l'acrylate de méthyle, l'acrylate d'éthyle, l'acrylate de n-butyle, l'acrylate de tertiobutyle, l'acrylate de 2-éthylhexyle, le méthacrylate de méthyle. Le constituant (A) représente avantageusement 50 à 99,99 parties en poids, de préférence 60 à 99,99 parties en poids, pour 100 parties en poids des monomères (A) + (B) + (C) + (D).

Comme monomères vinylaromatiques (B) utilisables dans les compositions de monomères selon l'invention, on peut citer le styrène, 1' α-méthylstyrène, le vinyltoluène, le p-tertiobutylstyrène, l'ortho-, le méta- et le paraméthylstyrène, l'ortho-, le méta- et le paraéthylstyrène, l'o-méthyl-p-isopropylstyrène, le p-chloro-styrène, le p-bromostyrène, l'o,p-dichlorostyrène, l'o,p-dibromostyrène, le vinylnaphtalène, divers vinyl(alkylnaphtalènes) et vinyl(halonaphtalènes). Le constituant (B) représente avantageusement de 0 à 40 parties en poids, de préférence 1 à 40 parties en poids et, plus préférentiellement, de 15 à 40 parties en poids, pour 100 parties en poids des monomères (A) + (B) + (C) + (D).

Comme acides mono- ou polycarboxyliques α,β insaturés à chaîne courte (C) utilisables dans les compositions de monomères selon l'invention, on peut citer l'acide acrylique, l'acide méthacrylique, l'acide itaconique, l'acide crotonique, l'acide maléique, l'acide fumarique, l'acide vinylbenzoïque. Le constituant (C) représente avantageusement 0,1 à 5 parties en poids, de préférence 0,1 à 2,5 parties en poids, pour 100 parties en poids des monomères (A) + (B) + (C) + (D).

La composition de monomères de l'invention peut en outre comprendre :
(E) jusqu'à 3 parties en poids d'au moins un monomère autre que (A), (B), (C), (D), copolymérisable avec ces derniers, pour 100 parties en poids des monomères (A). + (B) + (C) + (D).

A titre d'exemples de ces autres monomères (E), on peut citer les amides α,β-insaturés à chaîne courte, tels que l'acrylamide, le méthacrylamide, le N-hydroxyméthylacrylamide, le N=hydroxyméthyl-méthacrylamide, le N-méthoxyméthylacrylamide, le N-méthoxyméthylméthacrylamide, le N-butoxyméthylacrylamide, le N-butoxyméthylméthacrylamide, le N-isopropoxyméthylacrylamide, le N-isoamyloxyméthylméthacrylamide, le N-octoxyméthylacrylamide.

Le système réactionnel servant à la préparation de la dispersion de l'invention peut comprendre, en plus des monomères cités plus haut [(A) à (E)] :
(F) jusqu'à 2, en particulier jusqu'à 0,5 parties en poids d'au moins un agent de transfert de chaîne pour 100 parties en poids des monomères (A) + (B) + (C) + (D),
afin de régler la masse moléculaire moyenne en nombre du polymère résultant.

A titre d'exemples de composés utilisables comme agents de transfert de chaîne dans la présente invention, on peut citer les alkylmercaptans linéaires ou ramifiés et des acides mercaptocarboxyliques ayant de 2 à 8 atomes de carbone et leurs esters tels que l'acide mercaptoacétique, les acides mercapto-2 et mercapto-3 propioniques, l'acide mercapto-2 benzoïque, l'acide mercaptosuccinique, l'acide mercaptoisophtalique et leurs esters d'alkyle. On préférera utiliser des esters d'un acide mercaptomonocarboxylique et/ou d'un acide mercapto-dicarboxylique ayant de 2 à 6 atomes de carbone, plus particulièrement des esters d'alkyle d'un acide mercaptopropionique, plus spécialement les esters d'isooctyle ou de n-dodécyle de l'acide mercaptopropionique ou le n-dodécylmercaptan.

Egalement, la dispersion aqueuse de polymère de l'invention comprend au moins un agent tensio-actif, et avantageusement :
(G) 0,5 à 5 parties en poids, en particulier 0,5 à 3 parties en poids, d'au moins un agent tensio-actif anionique ; et
(H) 0 à 5 parties en poids, en particulier 0 à 3 parties en poids, d'au moins un agent tensio-actif non-ionique,
ces quantités étant calculées sur la base des matières solides ou sèches (pour tensioactif à 100% d'extrait sec) et exprimées par rapport à 100 parties en poids des monomères (A) + (B) +(C) + (D) de la composition globale engagée dans le latex final. Les taux indiqués sont donc des taux globaux sur le produit (dispersion) final obtenu après la fin de la polymérisation en émulsion.

Le composant (G) (au moins un tensio-actif anionique) est nécessairement présent comme tensio-actif dans toutes les étapes de polymérisation : prépolymérisation totale ou partielle et étapes additionnelles de poursuite de la polymérisation en émulsion. Sa présence est donc nécessaire dans toutes les compositions de monomères émulsifiées impliquées dans chacune des étapes mentionnées.

Le composant (H) (au moins un tensio-actif non-ionique) peut également être présent, auquel cas il est introduit (1) soit avec la charge de prépolymérisation, (2) soit à la fin de la dernière étape de polymérisation, (3) soit à la fois avec la charge de prépolymérisation et après la fin de la dernière étape de polymérisation. De préférence (H) est introduit en totalité après la fin de la dernière étape de polymérisation, afin d'améliorer la stabilité de la dispersion aqueuse finale. Cette stabilité est encore accrue par l'addition de (H) selon (3).

Les taux globaux de (H) (pour 100 parties de monomères dans latex final) sont notamment, pour chacune des options (1) et (2), de 0,2 à 5%, de préférence de 0,2 à 3% ; et pour l'option (3) , de 0,2 à 4% à chacun des deux moments indiqués, le taux global de (H) ne dépassant pas 5%.

En particulier, lorsque l'on introduit (H) avec la charge de monomères de prépolymérisation, le taux de (H) par rapport à la quantité cumulée de tensio-actifs (H) + (G) à cette étape varie de préférence de 10 à 50%.

En particulier, le taux de tensio-actif anionique, présent après la prépolymérisation totale ou partielle, par rapport aux monomères totaux (latex final) est de 0,2 à 2 %. Environ jusqu'à la moitié de la quantité de (G) total est avantageusement présente déjà à l'étape de prépolymérisation (totale ou partielle).

Comme agents tensio-actifs anioniques (G), on peut citer des sulfates et sulfonates de masse moléculaire élevée, par exemple des alkyl-, aryl- et alkylarylsulfates et sulfonates de sodium et de potassium, tels que le 2-éthylhexylsulfate de sodium, le 2-éthyl-hexylsulfate de potassium, le nonylsulfate de sodium, l'undécylsulfate de sodium, le tridécylsulfate de sodium, le pentadécyl-sulfate de sodium, le laurylsulfate de sodium, le méthylbenzènesulfonate de sodium, le méthylbenzènesulfonate de potassium, le toluènesulfonate de potassium et le xylène-sulfonate de sodium ; des alcools gras supérieurs, tels que ceux de stéaryle et de lauryle, qui ont été éthoxylés et sulfonés ; des dialkyl esters de sels alcalins d'acide sulfosuccinique, tels que le diamylsulfosuccinate de sodium ; et des produits de condensation formaldéhyde/acide naphtalènesulfonique.

Comme agents tensio-actifs non-ioniques (H), on peut citer des polyéthers, tels que des condensats d'oxyde d'éthylène et d'oxyde de propylène, des éthers et des thioéthers d'alkyle et alkylaryl polyéthylène glycols et polypropylène glycols, des alkylphénoxypoly(éthylèneoxy)-éthanols, des dérivés polyoxyalkylénés d'esters partiels d'acide gras à chaîne longue, des condensats d'oxyde d'éthylène avec des alkylmercaptans supérieurs, des dérivés d'oxyde d'éthylène d'acides carboxyliques à chaîne longue et d'alcools. Ces tensio-actifs non-ioniques contiennent de préférence d'environ 10 à 100 motifs éthylèneoxy par molécule et encore plus préférentiellement d'environ 20 à 50 telles unités.

La quantité d'eau utilisée dans le milieu réactionnel est en général déterminée par le taux de solides désiré dans l'émulsion polymère finie, qui se situe en général entre 40% et 70%, de préférence 45 et 60% en poids.

Les composants monomères des latex de la présente invention ont été polymérisés au moyen de quantités efficaces, de préférence entre 0,2 et 2% en poids de la charge totale de monomères, d'au moins un initiateur de radicaux libres conventionnel. Un tel initiateur est, de préférence, substantiellement hydrosoluble. De tels initiateurs comprennent des peroxydes minéraux, tels que le peroxyde d'hydrogène, des persulfates et perborates de métal alcalin et des système redox tels que des combinaisons d'un persulfate, perborate ou perchlorate d'ammonium ou de métal alcalin avec un bisulfite de métal alcalin.

La température de polymérisation requise pour produire les latex polymères aqueux de la présente invention, à la fois dans l'étape de prépolymérisation totale ou partielle impliquant de 2 à 20% en poids de la charge globale totale de monomères et dans la ou les étapes de polymérisation principale impliquant le reste des monomères, varie généralement d'environ 40 à 95°C - de préférence d'environ 55 à 85°C - en fonction de la durée prévue pour la polymérisation. La durée de la ou des étapes de polymérisation principale avec addition en au moins une fois de 80 à 98 % en poids des composants monomères restants au milieu réactionnel se situe généralement à environ 60 minutes à 8 heures, de préférence 90 minutes à 3 heures, cette durée étant plus élevée lorsque la température de polymérisation est plus basse.

En particulier, la dispersion aqueuse de polymère selon l'invention est avantageusement celle obtenue par un procédé comprenant les étapes successives suivantes :
(a) prépolymérisation totale ou partielle en émulsion de 2 à 20 % en poids de la composition globale des monomères (A) à (E), avec dans le cas d'une prépolymérisation partielle un taux global de conversion des monomères d'au moins 50%, de préférence d'au moins 90%, jusqu'à moins de 100% et en particulier jusqu'à 98% ;
(b) addition continue de 40 à 49 % en poids de la composition des monomères (A) à (E) à ladite pré-émulsion obtenue en (a), pendant 45 à 180 minutes, et poursuite de la polymérisation en émulsion pendant 0 à 60 minutes ; et
(c) addition continue des 40 à 49 % en poids restants de la composition des monomères (A) à (E) à l'émulsion obtenue à l'étape (b), pendant 15 à 120 minutes, et poursuite de la polymérisation en émulsion pendant 0 à 60 minutes,
tous les composants monomères ayant été introduits sous une forme émulsifiée. Les compositions de monomères impliquées dans les étapes (a), (b) et (c) dudit procédé peuvent être identiques pour les trois étapes mentionnées ou différentes à chacune de ces étapes, à la condition que lesdites compositions et leurs proportions spécifiques, associées pour chacune des ces étapes soient telles que la composition globale des monomères dans le produit final soit dans les plages définies précédemment pour les composants monomères (A) à (E) .

Dans un mode de réalisation particulier, ledit procédé comprend une étape supplémentaire finale (d) d'addition d'au moins un tensio-actif non ionique (H) dans le produit fini avec un taux global par rapport à la somme globale des monomères allant de 0,2 à 5 % et plus préférentiellement de 0;2 à 3%.

Selon un autre mode d'exécution particulier pouvant être combiné avec le mode précédent, à l'étape de prépolymérisation (totale ou partielle), au moins un tensio-actif non ionique (H) est combiné avec au moins un tensio-actif anionique (G), le tensioactif non ionique (H)représentant préférentiellement de 10 à 50 % de la somme cumulée des tensio-actifs (G) et (H) dans cette étape. Plus particulièrement, le taux de tensio-actifs anioniques (G) présents à cette étape représente environ jusqu'à la moitié de la quantité totale finale de ces tensio-actifs (G).

Avantageusement, la dispersion (latex) finale selon l'invention a été soumise, selon une autre variante de ce procédé, à une étape supplémentaire (c') de post-traitement au moyen d'un système initiateur de radicaux libres ayant un court temps de demi-vie afin d'atteindre un taux de monomère résiduel ne dépassant pas 50 ppm. Par rapport à la présence possible de l'étape (d) précédemment décrite, cette étape (c') est réalisée avant l'étape (d).

L'émulsion selon l'invention est notamment une émulsion permettant de parvenir à des valeurs de lessivabilité, mesurées selon la norme DIN 53778, aussi élevées qu'au moins 2400 cycles pour une mesure effectuée après 28 jours de séchage sur un film de peinture comprenant 6 % en poids de ladite composition polymère (calculés en extrait sec).

La présente invention porte également sur un procédé particulier de fabrication de l'émulsion polymère aqueuse telle que définie ci-dessus, caractérisé par le fait que :
(a) dans une première étape, on introduit dans un réacteur 2 à 20 % en poids de la composition des monomères (A) à (E) et on conduit une prépolymérisation totale ou partielle en émulsion, avec dans le cas d'une prépolymérisation partielle un taux global de conversion de monomères d'au moins 50 %, de préférence d'au moins 90%, et jusqu'à moins de 100% et en particulier jusqu'à 98%;
(b) dans une deuxième étape, on ajoute en continu 40 à 49 % de la composition des monomères (A) à (E) en l'espace de 45 à 180 minutes, et on poursuit la polymérisation en émulsion pendant 0 à 60 minutes ; et
(c) dans une troisième étape, on ajoute en continu les 40 à 49 % restants de la composition des monomères (A) à (E) en l'espace de 15 à 120 minutes, et on poursuit la polymérisation en émulsion pendant 0 à 60 minutes, jusqu'à achèvement,
tous les composants monomères étant introduits sous forme émulsifiée.

Conformément à différentes caractéristiques plus particulières du procédé :
- à chacune des étapes, on introduit au moins un agent tensio-actif anionique (G) représentant un taux cumulé final de 0,5 à 5 % en poids par rapport à la somme globale des monomères (A) à (D) dans le produit final ;
- au moins un tensio-actif non-ionique (H) est ajouté après la fin de la polymérisation principale en émulsion avec un taux global par rapport aux monomères (A) à (D) étant de 0,2 à 5 % ;
- au moins un tensio-actif non-ionique (H) peut être combiné avec un tensio-actif anionique (G) à l'étape de la prépolymérisation totale ou partielle, avec le tensioactif non ionique représentant de 10 à 50% des tensio-actifs cumulés (G)+(H) de l'étape, le tensio-actif anionique (G) représentant à cette étape avantageusement environ jusqu'à la moitié de la quantité totale finale de ces tensio-actifs (G) ;
- on conduit la prépolymérisation totale ou partielle de la première étape en contrôlant la taille des particules de polymère, afin d'obtenir une pré-émulsion ayant une taille moyenne de particules de polymère ne dépassant pas 95 nm, de préférence ne dépassant pas 85 nm et, plus particulièrement, ne dépassant pas 65 nm; le taux de conversion des monomères dans le cas d'une prépolymérisation partielle est d'au moins 50% de préférence d'au moins 90% et jusqu'à moins de 100% en particulier jusqu'à 98% ;
- on conduit la première étape pendant 5 à 45 minutes, à une température de 70 à 85°C ;
- on ajoute le restant des monomères à la deuxième et à la troisième étape à une température comprise entre 65 et 75°C, et l'on poursuit la polymérisation à chacune de ces étapes en élevant la température à une valeur comprise entre 75 et 85°C ; et
- on utilise trois mélanges de monomères dans les trois étapes respectives, qui peuvent avoir chacun les mêmes proportions de monomères que la composition (A) + (B) + (C) + (D) + (E), définie précédemment ou dont au moins deux ont des proportions différentes ; ainsi, la composition de la charge de monomères durant l'étape de prépolymérisation (totale ou partielle) peut être la même que, ou bien peut être différente de, la composition de la charge de monomères ajoutée au cours des deux étapes de polymérisation principale, pourvu cependant que la composition globale finale des monomères soit en accord avec la définition générale de la composition de monomères indiquée ci-dessus.

En vue d'atteindre un taux final de conversion de la réaction de polymérisation le plus proche de 100%, il peut être souhaitable de faire suivre la troisième étape (c) par une étape (c') de cuisson de la dispersion aqueuse de polymère pendant environ 30 à 90 minutes à une température de préférence d'au moins 8°C supérieure à la température de polymérisation (post-cuisson).

Une amélioration complémentaire de la présente invention réside dans le traitement de l'émulsion polymère aqueuse après la troisième étape (c) et, le cas échéant, après l'étape de post-cuisson (c'), au moyen d'un système d'initiation de radicaux libres ayant un temps de demi-vie court à la température considérée en vue d'atteindre un taux de conversion global proche de 100% et/ou un taux résiduel de monomères ne dépassant pas environ 50 ppm. Comme exemples de systèmes initiateurs de radicaux libres, on peut citer des peroxydes organiques et minéraux, tels que l'hydroperoxyde de tertiobutyle, le peroxyde de butyle, le peroxyde d'hydrogène ou des persulfates de métal alcalin, en combinaison avec un agent réducteur, tel que le formaldéhydesulfoxylate de sodium, l'acide ascorbique, le sel de Mohr. Un tel traitement peut être effectué à des températures de 40°C à 90°C environ.

Lorsque le latex préparé en conformité avec la présente invention paraîtra trop acide pour entrer dans la formulation de peintures, il pourra être souhaitable d'ajuster son pH à une valeur supérieure à 7, par exemple au moyen de toute matière alcaline, telle que les hydroxydes de sodium, de potassium ou d'ammonium.

La présente invention porte également sur l'utilisation d'une émulsion polymère aqueuse telle que définie ci-dessus ou préparée par le procédé tel que défini ci-dessus, dans des revêtements de protection et/ou de décoration sur des substrats tels que les parois murales, le bois, les métaux, les matières plastiques, les composites, et ceci pour un usage interne ou externe et, plus particulièrement, pour des peintures de protection et/ou décoratives à usage interne et/ou externe pour de tels substrats.

Un autre objet de la présente invention consiste en une composition de peinture, avantageusement sans plastifiant et sans agent de coalescence, comprenant comme liant au moins une émulsion aqueuse de polymère du type décrit ci-dessus ou préparée par le procédé particulier tel que décrit ci-dessus, ladite peinture aqueuse possédant des performances extraordinairement élevées et en particulier une lessivabilité significativement améliorée par rapport à celle des peintures aqueuses selon EP-B-0 690 882. En particulier, les compositions de peinture selon la présente invention renferment avantageusement moins de 10% en poids dudit liant (calculés en extrait sec). Comme précédemment indiqué, ces peintures possèdent avantageusement une valeur de lessivabilité, mesurée selon la norme DIN 53778, d'au moins 2400 cycles pour une mesure effectuée après 28 jours de séchage sur un film de peinture comprenant 6% en poids de ladite composition polymère (calculés en extrait sec).

La méthode de formulation utilisée peut être l'une quelconque de celles connues jusqu'ici dans la technique de formulation des peintures au latex. Essentiellement, les peintures aqueuses selon l'invention comprennent un mélange de matière pigmentaire et de latex. La matière pigmentaire est, de préférence, utilisée sous une forme convenablement réduite en poudre par des moyens conventionnels, ainsi que tous les autres adjuvants solides optionnels décrits ci-après.

Pour combiner les ingrédients de peinture afin de formuler la peinture au latex de la présente invention, un ou plusieurs pigments primaires et éventuellement d'autres adjuvants (qui eux-mêmes peuvent être liquides ou solides) peuvent être incorporés au liant latex pour former un mélange uniforme simplement en ajoutant toutes les matières premières dans un récipient agité. Bien qu'il soit possible de combiner les pigments et autres avec l'émulsion et de broyer ou piler le mélange dans un broyeur-disperséur, il est souhaitable de préparer d'abord une pâtes aqueuse de pigment et d'adjuvants, de préférence avec l'aide d'un agent dispersant, dans un dispositif à haut gradient de cisaillement, puis de combiner la pâte obtenue avec le latex. La consistance de la pâte peut être contrôlée par les quantités respectives d'eau, de pigments et d'adjuvants utilisés.

Les matières pigmentaires qui peuvent être utilisées pour formuler les peintures aqueuses de la présente invention comprennent (mais sans y être limitées) des pigments primaires conventionnels ou des bases colorantes telles que l'oxyde de titane, le noir de carbone, le sulfure de cadmium, le séléniure de cadmium, la phtalocyanine de cuivre, l'oxyde de zinc, le sulfure de zinc, l'oxyde de fer, l'oxyde de chrome. La proportion de matière pigmentaire utilisée pour formuler une peinture aqueuse selon la présente invention est déterminée par un certain nombre de facteurs, comprenant la profondeur de couleur désirée et le pouvoir couvrant. Etant donné que la présente invention est principalement applicable à des peintures mates c'est-à-dire selon la norme DIN 53778 (partie 1), offrant une réflexion supérieure à 7% mais inférieure à 45% sous un angle de 85°, la concentration pigmentaire en volume est, de préférence, comprise entre 70% et 95% environ.

En complément des pigments primaires, un ou plusieurs adjuvants peuvent, si désiré, être inclus dans la formulation des peintures aqueuses de la présente invention. De tels ingrédients comprennent (mais sans y être limités) :
- des dispersants, aussi dénommés défloculants, c'est-à-dire des composés capables d'amplifier la formation de charges électriques de même signe à la surface des particules de polymère et, par conséquent, de promouvoir la création de forces répulsives de nature électrique entre ces particules, tels que des silicates (en particulier des métasilicates) de métal alcalin, des polyphosphates de métal alcalin et des sels de métal alcalin de polyacides organiques (en particulier des polyacrylates) ;
- des agents mouillants, c'est-à-dire des composés capables de modifier la tension de surface du milieu, comprenant généralement des groupes de nature hydrophile et hydrophobe. Ils peuvent inclure des agents tensio-actifs anioniques (par exemple des alkylarylsulfonates de métal alcalin), cationiques (par exemple des sels d'ammonium quaternaires) ou non-ioniques (par exemples des polyétheroxydes) ;
- des modificateurs de rhéologie ou épaississants, tels que des polymères hydrosolubles modifiés par des groupes hydrophobes (par exemple éthoxylate d'uréthane modifié hydrophobe), et des dérivés d'hydroxyalkyl cellulose ;
- des bases minérales, c'est-à-dire par exemple l'ammoniaque, l'hydroxyde de sodium ou de potassium ;
- des agents anti-moussants tels qu'un mélange d'huile minérale et d'émulsifiant non-ionique ;
- des biocides, c'est-à-dire des composés capables de détruire les microorganismes, tels que des dérivés de chloroallyle ou d'isothiazolone ;
- des anticorrosifs tels qu'une solution aqueuse de benzoate de sodium et/ou de nitrite de sodium ;
- des insecticides, pesticides, fongicides et acaricides, tels que des composés pyréthrinoïdes (par exemple la décaméthrine ou la dïledrine), le lindane, des composés N-hétérocycliques, des composés uracyles, des dérivés de triazole, des composés organophosphorés.

Le choix des adjuvants particuliers et leurs quantités respectives sont généralement dictés par les propriétés désirées pour une peinture aqueuse particulière et sont à la portée de l' homme du métier. En général cependant, les peintures au latex de la présente invention possèdent un taux de matières solides global compris entre environ 40 et 70% en poids.

Les peintures aqueuses de la présente invention peuvent être appliquées à la surface d'un mur ou à tout autre substrat par tout moyen conventionnel, par exemple brosse, rouleau, pistolet. La peinture peut être réticulée ou séchée après application sur le substrat, également par dés moyens conventionnels, par exemple séchage à l'air, cuisson. Le revêtement de peinture, réticulé ou non, possède d'excellentes performances en ce qui concerne la résistance au jaunissement, la lessivabilité et la coalescence à basse température. En outre, les surfaces revêtues au moyen des peintures au latex selon la présente invention se comportent bien à l'égard du rapport de contraste (c'est-à-dire le pouvoir couvrant).

Les exemples suivants illustrent la présente invention sans toutefois en limiter la portée. Dans ces exemples, les parties et pourcentages sont en poids sauf indication contraire. Les abréviations suivantes ont été utilisées pour désigner les monomères utilisés :
- ABu : acrylate de butyle
- AA : acide acrylique
- St : styrène
- AM : acrylamide
- DAAM : diacétone acrylamide.

Les agents tensio-actifs utilisés étaient les suivants:
- Nonyphénol éther sulfate de sodium polyoxyéthyléné à 25 moles d'oxyde d'éthylène (tensio-actif anionique), commercialisé par la Société « WITCO » sous la marque « REWOPOL® NOS 25 » (35% actif) ;
- Ether sulfosuccinate d'alcools gras disodique (tensio-actif anionique), commercialisé par la Société « CYTEC » sous la marque « REWOPOL® SBFA 50 » (30% actif) ;
- Nonylphénol polyoxyéthyléné à 25 moles d'oxyde d'éthylène (tensio-actif non-ionique), commercialisé par la Société « COGNIS » sous la marque « DISPONIL® NP 2528 » (28% actif) ;
- Alcools linéaires en C₁₂-C₁₄, polyéthoxylés à 30 moles d'oxyde d'éthylène (tensio-actif non-ionique, commercialisé par la Société « COGNIS » sous la marque « DISPONIL® A-3065 » (65% actif).

Dans les exemples suivants, les agents tensio-actifs ont été désignés par les marques ci-dessus sous lesquelles ils sont commercialisés.

### EXEMPLES 1 ET 2 (DE L'INVENTION) . Préparation des Emulsions Polymères Aqueuses

### Mode opératoire général :

### Préparation d'une pré-émulsion PE des monomères

On prépare d'abord une pré-émulsion d'alimentation PE constituée par de l'eau déminéralisée, au moins un tensio-actif, les monomères et le n-dodécyl mercaptan (agent de transfert de chaîne). La composition et les proportions des constituants de cette pré-émulsion sont indiqués dans le Tableau 1. Pour cela, on ajoute à température ambiante (23°C) les ingrédients de la pré-émulsion PE dans l'ordre indiqué dans le Tableau 1, dans un récipient équipé d'un agitateur.

### Première étape : Prépolymérisation partielle

Dans un réacteur équipé d'un dispositif d'agitation, on introduit une charge A_{f} constituée par de l'eau et un agent tensio-actif tel qu'indiqué dans le Tableau 1, dans les proportions également indiquées dans le Tableau 1.

On porte la température à 76°C sous agitation à 100 tpm et on maintient le milieu à cette température pendant 10 minutes sous agitation.

On introduit ensuite dans le réacteur, en l'espace de 10 minutes, une charge B_{f} (ensemencement initial) constituée par 3,5 % de la pré-émulsion d'alimentation PE. On chauffe alors le réacteur à 76 °C, puis on le maintient à cette température. On ajoute alors dans le réacteur une solution aqueuse C_{f} de persulfate d'ammonium (initiateur), puis une solution aqueuse D_{f} de métabisulfite d'ammonium (activateur), solutions dont la composition et les proportions sont indiquées dans le Tableau 1. On ajoute ensuite de l'eau (E_{f}) pour rincer les conduites. La polymérisation est alors poursuivie pendant environ 20 minutes et la température commence à diminuer et atteint 80°C.

### Deuxième Etape : Premier stade de polymérisation principale

### · Additions :

Lorsque la température atteint 80°C, on commence à refroidir à 71°C en diminuant la température de 0,9°C/minute après quoi la température de 71°C est maintenue, et simultanément, on commence l'introduction en continu dans le réacteur, à vitesse uniforme :
- d'une charge F_{f} constituée par 48,25 % de la pré-émulsion PE, pendant 90 minutes ; et en même temps
- d'une solution aqueuse G_{f} de persulfate d'ammonium (initiateur) comme indiqué dans le Tableau 1 également pendant 90 minutes,
- une heure après le commencement de l'introduction de la charge F_{f} et de la solution G_{f}, on augmente l'agitation à 150 tpm (tours par minute), à raison de 50 tpm/heure.

### · Cuisson :

A la fin des additions, on maintient la température du réacteur à 71°C pendant 45 minutes, toujours sous agitation.

### Troisième étape : Second stade de polymérisation principale

### · Additions :

Lorsque la cuisson de l'étape précédente est terminée, on commence l'introduction simultanée en continu dans le réacteur, à vitesse uniforme, toujours sous agitation et avec maintien de la température à 71°C :
- d'une charge H_{f} constituée par les 48,25 % restants de la pré-émulsion PE, pendant 60 minutes ; et
- en même temps, également pendant 60 minutes, d'une solution aqueuse I_{f} de persulfate d'ammonium (initiateur), comme indiqué dans le Tableau 1.

### · Cuisson :

On ajoute ensuite de l'eau (J_{f}) pour rincer la conduite par laquelle on a introduit les charges F_{f} et H_{f}, et celle par laquelle on a introduit les solutions G_{f} et I_{f}. On porte ensuite le réacteur de 71°C à 80°C, à raison d'une augmentation de 0,45°C par minute, puis on procède à une cuisson en maintenant le réacteur à 80°C pendant 45 minutes.

### Post-traitement :

Lorsque la cuisson est terminée, on introduit simultanément à vitesse uniforme :
- une solution d'activateur K_{f} (BRUGGOLITH® FF6), comme indiqué dans le Tableau 1, en l'espace de 60 minutes et
- également en l'espace de 60 minutes, une émulsion d'amorceur L_{f} hydroperoxyde de tertiobutyle (TBHP) à 70%, également comme indiqué dans le Tableau 1.

Puis on rince les conduites avec de l'eau (M_{f}) et on maintient la température à 80°C pendant 30 minutes (post-cuisson).

On refroidit ensuite le réacteur jusqu'à 30°C, à raison de - 1°C/minute, pendant 50 minutes.

Lorsque la température de 30°C est atteinte, on ajoute à vitesse uniforme pendant 60 minutes une solution aqueuse de soude N_{f}, comme indiqué dans le Tableau 1 pour atteindre un pH de 8,3 ± 0,2. Lorsque cette phase de neutralisation est achevée, on ajoute une solution O_{f} contenant un biocide (MERGAL® K 15) et un agent de stabilisation à base de tensioactif non-ionique DISPONIL® A 3065 comme indiqué dans le Tableau 1.

**TABLEAU 1 : Composition des différents flux**

| EXEMPLE | 1 (invention) | 2 (invention) |
|---|---|---|
| Pré-émulsion PE* | | |
| · Eau déminéralisée | | |
| · Tensio-actifs | | |
| REWOPOL SBFA 50 | 2,40 | 3,10 |
| DISPONIL A-3065 | 1,00 | - |
| | | |
| Monomères | | |
| AA | 2,50 | 2,50 |
| ABu | 61,40 | 61,40 |
| St | 35,60 | 35,60 |
| AM | | |
| DAAM | 0,50 | 0,50 |
| Agent de transfert de chaîne | | |
| n-dodécylmercaptan | 0,05 | 0,05 |
| Charge A_{f} | | |
| Eau déminéralisée | 11359 | 11359 |
| REWOPOL® SBFA 50 | 388(0,40) | 388(0,40) |
| Charge B_{f} | | |
| 3,5 % de la pré-émulsion PE | 1406 | 1406 |
| Solution d'initiateur C_{f} | | |
| Eau déminéralisée | 84 | 84 |
| Persulfate d'ammonium | 35 | 35 |
| Solution d'activateur D_{f} | | |
| Eau déminéralisée | 84 | 84 |
| Métabisulfite d'ammonium | 6 | 6 |
| Eau E_{f} | 58 | 58 |
| Charge F_{f} 48,25% de la pré-émulsion PE | 19405 | 19405 |
| Solution d'initiateur G_{f} | 1347 | 1347 |
| Eau déminéralisée | | |
| Persulfate d'ammonium | 43 | 43 |
| Charge H_{f} | | |
| 48,25 % restants de la pré-émulsion PE | 19405 | 19405 |
| Solution d'initiateur I_{f} | | |
| Eau déminéralisée | 1347 | 1347 |
| Persulfate d'ammonium | 43 | 43 |
| Eau J_{f} | 346 | 346 |
| Solution activateur K_{f} | | |
| Eau déminéralisée | 792 | 792 |
| BRUGGOLITH® FF6 | 87 | 87 |
| Emulsion L_{f} | | |
| Eau déminéralisée | 663 | 663 |
| REWOPOL® SFBA 50 | 100 | 100 |
| TBHP à 70 % | 124 | 124 |
| Eau M_{f} | 174 | 174 |
| Solution N_{f} de neutralisation | | |
| Eau déminéralisée | 1513 | 1513 |
| Hydroxyde de sodium à 45 % | 561 | 561 |
| Solution O_{f} de biocide et de stabilisation | | |
| Eau déminéralisée | 116 | 116 |
| DISPONIL® A 3065 | 432 (1,00) | 432 (1,00) |
| MERGAL K 15 | 84 | 84 |

| | | |
|---|---|---|
| * Les valeurs indiquées dans la partie pré-émulsion PE et celles indiquées entre parenthèses dans le reste du tableau sont exprimées en matières solides par rapport aux monomères totaux. Les autres valeurs indiquées sont en g. | | |

### EXEMPLE 3 (EP-B-0 690 882)

On a préparé un latex selon le brevet européen EP-B-0 690 882 en utilisant la pré-émulsion de l'Exemple 2
- excepté que les 3,10%(*) de REWOPOL® SBFA 50 ont été remplacés par 0,95 %(*) de REWOPOL® NOS 25 et 6.40 %(*) de DISPONIL® NP 2528 ;
- en utilisant une charge A_{f} dans laquelle les 0,40 %(*) de REWOPOL® SBFA 50 ont été remplacés par 0,3 %(*) de REWOPOL® NOS 25 ;
   (*) Les valeurs indiquées sont exprimées en matières solides par rapport aux momomères totaux.
- en utilisant une charge B_{f} d'ensemencement initial de 10 % au lieu de 3,50 % de la pré-émulsion PE ;
- en ne pratiquant qu'une seule étape de polymérisation par addition continue, à une vitesse uniforme, des 90 % restants en l'espace de 4,5 heures ; et
- en n'introduisant pas de DISPONIL® A 3065 dans la solution O_{f}.

Les caractéristiques du latex obtenu sont rapportées dans le Tableau 2.

**TABLEAU 2**

| EXEMPLE | 1 (invention) | 2 (invention) | 3 (EP-B-690882) |
|---|---|---|---|
| Taux de matières solides (%) | 51,2 | 51,1 | 50,87 |
| pH | 8,2 | 8,94 | 8,35 |
| Taille des particules de semence (nm)* | 40 | | |
| Taille moyenne finale des particules du latex (nm) * | 104,3 | 88,8 | 140,1 |
| Polydispersité | 0,200 | 0,259 | |
| Viscosité Brookfield à 22°C (mPa.s) | 420 | 1120 | 2820 |
| LVT 2-3/30 tpm à 22°C (Poises) | 4,20 | 11,20 | 28,20 |
| Taux de monomères résiduels (ppm) | <50 | <50 | <200 |
| Température de filmification minimale (°C) | <0 | <0 | <0 |

| | | | |
|---|---|---|---|
| * Mesurée par l'appareil Auto Sizer Lo-C de MALVERN INSTRUMENTS | | | |

### EXEMPLE 4 : Performances de films formés à partir des émulsions aqueuses polymères obtenues

On a formé des films de chacune des émulsions aqueuses polymères obtenues en appliquant une couche d'émulsion de 100 µm sur une plaque de verre et en séchant pendant 2 heures à la température ambiante et pendant 16 heures à 50°C.

Les performances des films sont rapportées dans le Tableau 3.

**TABLEAU 3**

| Film formé à partir de l'émulsion de l'Exemple | 1 (invention) | 2 (invention) | 3 (EP-B-690882) |
|---|---|---|---|
| Aspect | Brillant | Brillant | Brillant |
| Évaluation du film après immersion pendant 1 heure/3 heures dans l'eau | | | |
| - Absorption d'eau * | 0/2 | 0/1-2 | 10 |
| - Gonflement ** | 2/4 | 2/4 | 10 |
| - Perte d'adhésion sur le verre *** | 3/5 | 3/7 | 10 |

| | | | |
|---|---|---|---|
| * Absorption d'eau : les critères d'appréciation pour l'absorption d'eau sont les suivants : 0 : film totalement transparent ↓ film bleuâtre ↓ 10 : film totalement blanc | | | |
| ** Gonflement : les critères d'appréciation pour le gonflement sont les suivants : 0 : aucun gonflement du film ↓ 10 : film totalement gonflé. | | | |
| *** Perte d'adhésion sur le verre : les critères d'appréciation pour la perte d'adhésion sur le verre sont les suivants : 0 : aucune perte d'adhésion du film ↓ 10 : film totalement séparé du verre. | | | |

### EXEMPLE 5 : Préparation et évaluation de compositions de peinture

Les dispersions aqueuses de polymères des Exemples 1 à 4 ont été formulées dans des compositions de peinture comprenant :

| | | |
|---|---|---|
| - | Eau | 287,20 parties |
| - | Agent mouillant commercialisé par la Société « BENKIZER » sous la marque «LOPON® 890 » | 3,00 |
| - | Agent mouillant et dispersant commercialisé par la Société « MUNZING » sous la marque « AGITAN® 281 » | 2,00 |
| - | Biocide commercialisé par la Société « RIEDEL DE HAEN » sous la marque « MERGAL® K 15 » | 2,00 |
| - | Agent épaississant (modificateur de rhéologie) commercialisé par la Société « HOECHST » sous la marque «TYLOSE® MH 6000 YG 8 » | 4,80 |
| - | Oxyde de titane commercialisé par la société «SACHTLEBEN» sous la marque « HOMBITAN R 611 » | 50,00 |
| - | Carbonate de calcium commercialisé par la Société « DEUTSCHE SOLVAY» sous la marque « SOCAL PZ » | 160,00 |
| - | Craie | 250,00 |
| - | Carbonate de calcium commercialisé par la Société « OMYA » sous la marque « OMYA CARB® 10 GU » | 110, 00 |
| - | Silice commercialisée par la Société « LANGER » sous la marque « DICALITE WB5 » | 10,00 |
| - | Solution aqueuse de soude à 25 % | 1,00 |
| - | Emulsion aqueuse de polymère 120,00 | |
| | | 1000,00 |

La lessivabilité ou résistance à l'abrasion à l'état humide (WSR - Wet Scrub Resistance) de ces peintures a été mesurée après 7 et 28 jours conformément à la norme DIN 53778. le Tableau 4 suivant indique les valeurs de lessivabilité, exprimée en cycles, en fonction de la nature de l'émulsian aqueuse polymère utilisée.

**TABLEAU 4**

| Lessivabilité de la peinture comportant l'émulsion aqueuse polymérisée de l'Exemple | 1 (invention) | 2 (invention) | 3 (EP-B-690882) |
|---|---|---|---|
| à 28 jours selon DIN 53778 | 2600 ± 200 | 2750 ±250 | 1100 ±100 |

## Revendications

1. Dispersion aqueuse de polymère, préparée à partir d'une composition de monomères comprenant :
(A) 50 à 99,99 parties en poids d'au moins un ester acrylique ou méthacrylique dérivé d'acide acrylique ou méthacrylique et d'un alcool ayant 1 à 12 atomes de carbone ;
(B) 0 à 40 parties en poids d'au moins un monomère vinylaromatique ;
(C) 0 à 5 parties en poids d'au moins un acide mono- ou polycarboxylique α,β-insaturé à chaîne courte ; et
(D) 0,01 à 5 parties en poids d'au moins un composé (D) monomère alpha-bêta éthyléniquement insaturé, comportant au moins un groupement carbonyle ayant au moins un atome d'hydrogène porté par un atome de carbone en position alpha dudit carbonyle,
pour 100 parties en poids des monomères (A) + (B) + (C) + (D),
80 à 98 % en poids des composants monomères ayant été ajoutés à un milieu réactionnel contenant déjà une pré-émulsion totalement ou partiellement polymérisée représentant de 2 à 20 % en poids du taux global final des composants monomères dans la dispersion finalement obtenue.

2. Dispersion aqueuse de polymère selon la revendication 1, **caractérisée par le fait qu'**elle ne comporte aucun composant ou groupement fonctionnel susceptible de réagir avec les motifs issus dudit ou desdits composés (D) dans une réaction d'autoréticulation.

3. Dispersion aqueuse de polymère selon l'une des revendications 1 et 2, **caractérisée par le fait que** le ou les composés (D) sont choisis parmi le diacétone acrylamide, le diacétone méthacrylamide, le 2-butanone (méth)acrylate, l'acétoacétate de vinyle et le (méth)acrylate d'acétoacétoxyéthyle.

4. Dispersion aqueuse de polymère selon la revendication 3, **caractérisée par le fait que** le ou les composés (D) sont choisis parmi le diacétone acrylamide et le diacétone méthacrylamide.

5. Dispersions aqueuse de polymère selon l'une des revendications 1 à 4, **caractérisée par le fait que** le composant (D) représente 0,1 à 2,5 parties en poids pour 100 parties en poids des monomères (A) + (B) + (C) + (D).

6. Dispersion aqueuse de polymère selon la revendication 5, **caractérisée par le fait que** le composant (D) représente 0,2 à 0,75 partie en poids pour 100 parties en poids des monomères (A) + (B) + (C) + (D).

7. Dispersion aqueuse de polymère selon l'une des revendications 1 à 6, **caractérisée par le fait que** le constituant (A) représente 60 à 99,9 parties en poids de (A) + (B) + (C) + (D).

8. Dispersion aqueuse de polymère selon l'une des revendications 1 à 7, **caractérisée par le fait que** le constituant (B) représente 1 à 40 parties en poids pour 100 parties en poids des monomères (A) + (B) + (C) + (D).

9. Dispersion aqueuse de polymère selon l'une des revendications 1 à 8, **caractérisée par le fait que** le constituant (C) représente 0,1 à 5 parties en poids pour 100 parties en poids des monomères (A) + (B) + (C) + (D).

10. Dispersion aqueuse de polymère selon l'une des revendications 1 à 9, **caractérisée par le fait que** la composition de monomères comprend en outre :
(E) jusqu'à 3 parties en poids d'au moins un monomère autre que (A), (B), (C), (D), copolymérisable avec ces derniers, pour 100 parties en poids des monomères (A) + (B) + (C) + (D).

11. Dispersion aqueuse de polymère selon l'une des revendications 1 à 10, **caractérisée par le fait que** le système réactionnel ayant servi à sa préparation comprend en outre :
(F) jusqu'à 2 parties en poids d'au moins un agent de transfert de chaîne pour 100 parties en poids des monomères (A) + (B) + (C) + (D).

12. Dispersion aqueuse de polymère selon l'une des revendications 1 à 11, **caractérisée par le fait qu'**elle renferme :
(G) 0,5 à 5 parties en poids d' au moins un agent tensio-actif anionique ; et
(H) 0 à 5 parties en poids d'au moins un agent tensio-actif non-ionique,
ces quantités étant calculées sur la base des matières solides ou sèches et exprimées par rapport à 100 parties en poids des monomères (A) + (B) + (C) + (D) dans la composition globale engagée dans le latex final.

13. Dispersion aqueuse de polymère selon l'une des revendications 1 à 12, **caractérisée par le fait que** la taille moyenne des particules de polymère présentes dans ladite pré-émulsion totalement ou partiellement polymérisée a été contrôlée pour ne pas dépasser 95 nm.

14. Dispersion aqueuse de polymère selon l'une des revendications 1 à 13, **caractérisée par le fait qu'**elle a été obtenue par un procédé comprenant les étapes successives suivantes :
(a) prépolymérisation totale ou partielle en émulsion de 2 à 20 % en poids de la composition globale des monomères (A) à (E) ;
(b) addition continue de 40 à 49 % en poids de la composition des monomères (A) à (E) à ladite pré-émulsion totalement ou partiellement prépolymérisée, pendant 45 à 180 minutes, et poursuite de la polymérisation en émulsion pendant 0 à 60 minutes ; et
(c) addition continue des 40 à 49 % en poids restants de la composition des monomères (A) à (E) à l'émulsion obtenue à l'étape (b), pendant 15 à 120 minutes, et poursuite de la polymérisation en émulsion pendant 0 à 60 minutes,
tous les composants monomères ayant été introduits sous une forme émulsifiée.

15. Dispersion aqueuse de polymère selon l'une des revendications 1 à 14, **caractérisée par le fait qu'**elle a été soumise à une étape supplémentaire finale (d) d'addition d'au moins un tensio-actif non-ionique dans le produit fini avec un taux global par rapport à la somme globale des monomères allant de 0,2 à 5%.

16. Dispersion aqueuse selon l'une des revendications 1 à 15, **caractérisé par le fait qu'**à l'étape de prépolymérisation totale ou partielle, au moins un tensio-actif non ionique (H) est combiné avec au moins un tensio-actif anionique (G), le tensioactif non-ionique (H) représentant préférentiellement de 10 à 50 % de la somme cumulée des tensio-actifs (G) et (H) dans cette étape.

17. Dispersion aqueuse de polymère selon l'une des revendications 1 à 16, **caractérisée par le fait qu'**elle a été soumise à un post-traitement (c') au moyen d'un système initiateur de radicaux libres ayant un court temps de demi-vie afin d'atteindre un taux de monomère résiduel ne dépassant pas 50 ppm.

18. Dispersion aqueuse de polymère selon l'une des revendications 1 à 17, **caractérisée par le fait qu'**elle permet de parvenir à des valeurs de lessivabilité, mesurées selon la norme DIN 53778, aussi élevées qu'au moins 2400 cycles pour une mesure effectuée après 28 jours de séchage sur un film de peinture comprenant 6 % en poids de ladite composition polymère (calculés en extrait sec).

19. Procédé de fabrication d'une dispersion aqueuse de polymère telle que définie à l'une des revendications 1 à 18, **caractérisé par le fait que** :
(a) dans une première étape, on introduit dans un réacteur 2 à 20 % en poids de la composition des monomères (A) à (E) et on conduit une prépolymérisation totale ou partielle en émulsion avec dans le cas d'une prépolymérisation partielle un taux global de conversion de monomères d'au moins 50% et jusqu'à moins de 100%,
(b) dans une deuxième étape, on ajoute en continu 40 à 49 % de la composition des monomères (A) à (E) en l'espace de 45 à 180 minutes, et on poursuit la polymérisation en émulsion pendant 0 à 60 minutes ; et
(c) dans une troisième étape, on ajoute en continu les 40 à 49 % restants de la composition des monomères (A) à (E) en l'espace de 15 à 120 minutes, et on poursuit la polymérisation en émulsion pendant 0 à 60 minutes, jusqu'à achèvement,
tous les composants monomères étant introduits sous une forme émulsifiée.

20. Procédé selon la revendication 19, **caractérisé par le fait qu'**à chacune des étapes, on introduit avec la charge des monomères, au moins un agent tensio-actif anionique (G) représentant un taux cumulé final de 0,5 à 5 % en poids par rapport à la somme globale des monomères (A) à (D) dans le produit final.

21. Procédé selon l'une des revendications 19 et 20, **caractérisé par le fait qu'**au moins un tensio-actif non-ionique (H) est ajouté après la fin de la polymérisation principale en émulsion avec un taux global par rapport aux monomères (A) à (D) étant de 0,2 à 5 %.

22. Procédé selon l'une des revendications 19 à 21, **caractérisé par le fait qu'**au moins un tensio-actif non-ionique (H) est combiné avec un tensio-actif anionique (G) à l'étape de la prépolymérisation totale ou partielle, avec le tensioactif non-ionique (H) représentant de 10 à 50% des tensio-actifs cumulés de l'étape, le tensio-actif anionique (G) représentant à cette étape avantageusement environ jusqu'à la moitié de la quantité totale finale de ce tensio-actif anionique (G).

23. Procédé selon l'une des revendications 19 à 22, **caractérisé par le fait que** l'on conduit la prépolymérisation totale ou partielle de la première étape en contrôlant la taille des particules de polymère, afin d'obtenir une pré-émulsion ayant une taille moyenne de particules de polymère ne dépassant pas 95 nm.

24. Procédé selon l'une des revendications 19 à 23, **caractérisé par le fait que** l'on conduit la première étape pendant 5 à 45 minutes, à une température comprise entre 70 et 85°C.

25. Procédé selon l'une des revendications 19 à 24, **caractérisé par le fait que** l'on ajoute le restant des monomères à la deuxième et à la troisième étape à une température comprise entre 65 et 75°C, et que l'on poursuit la polymérisation à chacune de ces étapes en élevant la température à une valeur comprise entre 75 et 85°C.

26. Procédé selon l'une des revendications 19 à 25, **caractérisé par le fait que** l'on utilise trois mélanges de monomères dans les trois étapes respectives, qui ont chacun les mêmes proportions de monomères que la composition (A) + (B) + (C) + (D) + (E), ou dont au moins deux ont des proportions différentes.

27. Procédé selon l'une des revendications 19 à 26, **caractérisé par le fait que** l'on fait suivre la troisième étape (c) par une étape (c') de cuisson de la dispersion aqueuse de polymère pendant environ 30 à 90 minutes à une température de préférence d'au moins 8°C supérieure à la température de polymérisation.

28. Utilisation de la dispersion aqueuse de polymère telle que définie à l'une des revendications 1 à 17, ou préparée par le procédé tel que défini à l'une des revendications 19 à 27, dans des revêtements de protection et/ou de décoration sur des substrats tels que les parois murales, le bois, les métaux, les matières plastiques, les composites, et ceci pour un usage interne ou externe et, plus particulièrement, pour des peintures de protection et/ou décoratives à usage interne et/ou externe pour de tels substrats.

29. Composition de peinture comprenant, comme liant, au moins une dispersion aqueuse de polymère telle que définie à l'une des revendications 1 à 17, ou préparée par le procédé tel que défini à l'une des revendications 18 à 27.

30. Composition de peinture selon la revendication 29, **caractérisée par le fait qu'**elle ne comporte ni plastifiant, ni agent de coalescence.

31. Composition de peinture selon l'une des revendications 29 et 30, **caractérisée par le fait qu'**elle renferme moins de 10% en poids dudit liant (calculés en extrait sec).

32. Composition de peinture selon l'une des revendications 29 à 31, **caractérisée par le fait qu'**elle possède une valeur de lessivabilité, mesurée selon la norme DIN 53778, d'au moins 2400 cycles pour une mesure effectuée après 28 jours de séchage sur un film de peinture comprenant 6% en poids de ladite composition polymère (calculés en extrait sec).

## Claims

1. An aqueous polymer dispersion prepared from a monomer composition comprising:
(A) 50 to 99.99 parts by weight of at least one acrylic or methacrylic ester derived from acrylic or methacrylic acid and from an alcohol having 1 to 12 carbon atoms;
(B) 0 to 40 parts by weight of at least one vinylaromatic monomer;
(C) 0 to 5 parts by weight of at least one short-chain α,β-unsaturated mono- or polycarboxylic acid; and
(D) 0.01 to 5 parts by weight of at least one α,β-ethylenically unsaturated monomer compound (D) comprising at least one carbonyl group having at least one hydrogen atom carried by a carbon atom
in the α position with respect to said carbonyl, per 100 parts by weight of the monomers (A) + (B) + (C) + (D),
80 to 98% by weight of the monomer components having been added to a reaction medium already comprising a completely or partially polymerized pre-emulsion representing from 2 to 20% by weight of the final overall level of the monomer components in the dispersion finally obtained.

2. The aqueous polymer dispersion as claimed in claim 1, **characterized in that** it does not comprise any functional group or component capable of reacting with the units resulting from said compound or compounds (D) in a self-crosslinking reaction.

3. The aqueous polymer dispersion as claimed in either of claims 1 and 2, **characterized in that** the compound or compounds (D) are chosen from diacetone acrylamide, diacetone methacrylamide, 2-butanone (meth)acrylate, vinyl acetoacetate and acetoacetoxyethyl (meth) acrylate.

4. The aqueous polymer dispersion as claimed in claim 3, **characterized in that** the compound or compounds (D) are chosen from diacetone acrylamide and diacetone methacrylamide.

5. The aqueous polymer dispersion as claimed in one of claims 1 to 4, **characterized in that** the component (D) represents 0.1 to 2.5 parts by weight per 100 parts by weight of the monomers (A) + (B) + (C) + (D).

6. The aqueous polymer dispersion as claimed in claim 5, **characterized in that** the component (D) represents 0.2 to 0.75 part by weight per 100 parts by weight of the monomers (A) + (B) + (C) + (D).

7. The aqueous polymer dispersion as claimed in one of claims 1 to 6, **characterized in that** the constituent (A) represents 60 to 99.9 parts by weight of (A) + (B) + (C) + (D) .

8. The aqueous polymer dispersion as claimed in one of claims 1 to 7, **characterized in that** the constituent (B) represents 1 to 40 parts by weight per 100 parts by weight of the monomers (A) + (B) + (C) + (D).

9. The aqueous polymer dispersion as claimed in one of claims 1 to 8, **characterized in that** the constituent (C) represents 0.1 to 5 parts by weight per 100 parts by weight of the monomers (A) + (B) + (C) + (D).

10. The aqueous polymer dispersion according to one of claims 1 to 9, **characterized in that** the monomer composition additionally comprises:
(E) up to 3 parts by weight of at least one monomer other than (A), (B), (C) or (D) which can be copolymerized with the latter, per 100 parts by weight of the monomers (A) + (B) + (C) + (D).

11. The aqueous polymer dispersion as claimed in one of claims 1 to 10, **characterized in that** the reaction system which was used for its preparation additionally comprises:
(F) up to 2 parts by weight of at least one chain transfer agent per 100 parts by weight of the monomers (A) + (B) + (C) + (D).

12. The aqueous polymer dispersion as claimed in one of claims 1 to 11, **characterized in that** it includes:
(G) 0.5 to 5 parts by weight of at least one anionic surface-active agent; and
(H) 0 to 5 parts by weight of at least one nonionic surface-active agent,
these amounts being calculated on the basis of the solid or dry matter and being expressed with respect to 100 parts by weight of the monomers (A) + (B) + (C) + (D) in the overall composition used in the final latex.

13. The aqueous polymer dispersion as claimed in one of claims 1 to 12, **characterized in that** the mean size of the polymer particles which are present in said completely or partially polymerized pre-emulsion was controlled in order not to exceed 95 nm.

14. The aqueous polymer dispersion as claimed in one of claims 1 to 13, **characterized in that** it was obtained by a process comprising the following successive stages:
(a) complete or partial emulsion prepolymerization of 2 to 20% by weight of the overall composition of the monomers (A) to (E);
(b) continuous addition of 40 to 49% by weight of the composition of the monomers (A) to (E) to said completely or partially prepolymerized pre-emulsion over 45 to 180 minutes and continuation of the emulsion polymerization for 0 to 60 minutes; and
(c) continuous addition of the remaining 40 to 49% by weight of the composition of the monomers (A) to (E) to the emulsion obtained in stage (b) over 15 to 120 minutes and continuation of the emulsion polymerization for 0 to 60 minutes,
all the monomer components having been introduced in an emulsified form.

15. The aqueous polymer dispersion as claimed in one of claims 1 to 14, **characterized in that** it has been subjected to a final additional stage (d) of addition of at least one nonionic surfactant to the finished product with an overall level, with respect to the overall sum of the monomers, ranging from 0.2 to 5%.

16. The aqueous polymer dispersion as claimed in one of claims 10 to 15, **characterized in that**, at the complete or partial prepolymerization stage, at least one nonionic surfactant (H) is combined with at least one anionic surfactant (G), the nonionic surfactant (H) preferably representing from 10 to 50% of the cumulative sum of the surfactants (G) and (H) in this stage.

17. The aqueous polymer dispersion as claimed in one of claims 1 to 16, **characterized in that** it has been subjected to a post-treatment (c') using an initiator system of free radicals having a short half-life, in order to achieve a residual monomer level not exceeding 50 ppm.

18. The aqueous polymer dispersion as claimed in one of claims 1 to 17, **characterized in that** it makes it possible to achieve wash ability values, measured according to the DIN 53778 standard, as high as at least 2 400 cycles for a measurement carried out after drying for 28 days on a paint film comprising 6% by weight of said polymer composition (calculated on a dry basis).

19. A process for the manufacture of an aqueous polymer dispersion as defined in one of claims 1 to 18, **characterized in that**:
(a) in a first stage, 2 to 20% by weight of the composition of the monomers (A) to (E) are introduced into a reactor and a complete or partial emulsion prepolymerization is carried out with, in the case of a partial prepolymerization, an overall degree of conversion of monomers of at least 50% and up to less than 100%;
(b) in a second stage, 40 to 49% of the composition of the monomers (A) to (E) are added continuously in the space of 45 to 180 minutes and the emulsion polymerization is continued for 0 to 60 minutes; and
(c) in a third stage, the remaining 40 to 49% of the composition of the monomers (A) to (E) are added continuously in the space of 15 to 120 minutes and the emulsion polymerization is continued for 0 to 60 minutes, to completion,
all the monomer components being introduced in an emulsified form.

20. The process as claimed in claim 19, **characterized in that**, at each of the stages, at least one anionic surface-active agent (G) representing a final cumulative level of 0.5 to 5% by weight with respect to the overall sum of the monomers (A) to (D) in the final product is introduced with the monomer charge.

21. The process as claimed in either of claims 19 and 20, **characterized in that** at least one nonionic surfactant (H) is added after the end of the main emulsion polymerization with an overall level with respect to the monomers (A) to (D) being from 0.2 to 5%.

22. The process as claimed in one of claims 19 to 21, **characterized in that** at least one nonionic surfactant (H) is combined with an anionic surfactant (G) at the stage of the complete or partial prepolymerization, with the nonionic surfactant (H) representing from 10 to 50% of the cumulative surfactants of the stage, the anionic surfactant (G) representing, at this stage, advantageously approximately up to half of the final total amount of this anionic surfactant (G).

23. The process as claimed in one of claims 19 to 22, **characterized in that** the complete or partial prepolymerization of the first stage is carried out while controlling the size of the polymer particles, in order to obtain a pre-emulsion having a mean size of polymer particles not exceeding 95 nm.

24. The process as claimed in one of claims 19 to 23, **characterized in that** the first stage is carried out for 5 to 45 minutes at a temperature of between 70 and 85°C.

25. The process as claimed in one of claims 19 to 24, **characterized in that** the remainder of the monomers is added to the second and to the third stage at a temperature of between 65 and 75°C and that the polymerization is continued at each of these stages while raising the temperature to a value of between 75 and 85°C.

26. The process as claimed in one of claims 19 to 25, **characterized in that** three mixtures of monomers are used in the three respective stages, which mixtures each have the same proportions of monomers as the composition (A) + (B) + (C) + (D) + (E) or at least two of the mixtures have different proportions.

27. The process as claimed in one of claims 19 to 26, **characterized in that** the third stage (c) is followed by a stage (c') of heating the aqueous polymer dispersion for approximately 30 to 90 minutes at a temperature preferably at least 8°C greater than the polymerization temperature.

28. Use of the aqueous polymer dispersion as defined in one of claims 1 to 17 or prepared by the process as defined in one of claims 19 to 27 in protective and/or decorative coatings on substrates such as wall faces, wood, metals, plastics or composites, this being the case for internal or external use, and, more particularly, for protective and/or decorative paints for internal and/or external use for such substrates.

29. A paint composition comprising, as binder, at least one aqueous polymer dispersion as defined in one of claims 1 to 17 or prepared by the process as defined in one of claims 18 to 27.

30. The paint composition as claimed in claim 29, **characterized in that** it comprises neither plasticizer nor coalescent.

31. The paint composition as claimed in either of claims 29 and 30, **characterized in that** it includes less than 10% by weight of said binder (calculated on a dry basis).

32. The paint composition as claimed in one of claims 29 to 31, **characterized in that** it has a washability value, measured according to the DIN 53778 standard, of at least 2 400 cycles for a measurement carried out after drying for 28 days on a paint film comprising 6% by weight of the said polymer composition (calculated on a dry basis).

## Patentansprüche

1. Wässrige Polymerdispersion, die aus einer Monomerzusammensetzung hergestellt ist, umfassend:
(A) 50 bis 99,99 Gew.-Teile mindestens eines Acryl- oder Methacrylesters, abgeleitet von Acrylsäure oder Methacrylsäure und einem Alkohol mit 1 bis 12 Kohlenstoffatomen;
(B) 0 bis 40 Gew.-Teile mindestens eines vinylaromatischen Monomers;
(C) 0 bis 5 Gew.-Teile mindestens einer kurzkettigen α,β-ungesättigten Mono- oder Polycarbonsäure; und
(D) 0,01 bis 5 Gew.-Teile mindestens einer alphabeta- ethylenisch ungesättigten Monomerverbindung (D), die mindestens eine Carbonylgruppe umfasst, die mindestens ein Wasserstoffatom aufweist, das von einem Kohlenstoffatom an der Alphaposition des Carbonyls getragen wird,
für 100 Gew.-Teile der Monomere (A) + (B) + (C) + (D),
80 bis 98 Gew.-% der Monomerkomponenten, die einem Reaktionsmedium zugefügt wurden, das bereits eine vollständig oder teilweise polymerisierte Voremulsion enthält, die 2 bis 20 Gew.-% des gesamten Schlussanteils der Monomerkomponenten in der endgültig erhaltenen Dispersion darstellen.

2. Wässrige Polymerdispersion nach Anspruch 1, **gekennzeichnet durch** die Tatsache, dass sie keinerlei Komponente oder funktionelle Gruppe umfasst, die mit den Motiven in einer Selbstvernetzungsreaktion reagieren könnte, die aus der oder den Verbindungen (D) hervorgegangen sind.

3. Wässrige Polymerdispersion nach einem der Ansprüche 1 und 2, **gekennzeichnet durch** die Tatsache, dass die Komponente(n) (D) ausgewählt ist/sind aus Diacetonacrylamid, Diacetonmethacrylamid, 2-Butanon(meth)acrylat, Vinylacetoacetat und Acetoacetoxyethyl(meth)acrylat.

4. Wässrige Polymerdispersion nach Anspruch 3, **gekennzeichnet durch** die Tatsache, dass die Komponente (n) (D) ausgewählt ist/sind aus Diacetonacrylamid und Diacetonmethacrylamid.

5. Wässrige Polymerdispersion nach einem der Ansprüche 1 bis 4, **gekennzeichnet durch** die Tatsache, dass die Komponente (D) 0,1 bis 2,5 Gew.-Teile für 100 Gew.-Teile der Monomere (A) + (B) + (C) + (D) darstellt.

6. Wässrige Polymerdispersion nach Anspruch 5, **gekennzeichnet durch** die Tatsache, dass die Komponente (D) 0,2 bis 0,75 Gew.-Teile für 100 Gew.-Teile der Monomere (A) + (B) + (C) + (D) darstellt.

7. Wässrige Polymerdispersion nach einem der Ansprüche 1 bis 6, **gekennzeichnet durch** die Tatsache, dass der Bestandteil (A) 60 bis 99,9 Gew.-Teile von (A) + (B) + (C) + (D) darstellt.

8. Wässrige Polymerdispersion nach einem der Ansprüche 1 bis 7, **gekennzeichnet durch** die Tatsache, dass der Bestandteil (B) 1 bis 40 Gew.-Teile für 100 Gew.-Teile der Monomere (A) + (B) + (C) + (D) darstellt.

9. Wässrige Polymerdispersion nach einem der Ansprüche 1 bis 8, **gekennzeichnet durch** die Tatsache, dass der Bestandteil (C) 0,1 bis 5 Gew.-Teile für 100 Gew.-Teile der Monomere (A) + (B) + (C) + (D) darstellt.

10. Wässrige Polymerdispersion nach einem der Ansprüche 1 bis 9, **gekennzeichnet durch** die Tatsache, dass die Monomerzusammensetzung zudem umfasst:
(E) bis zu 3 Gew.-Teile mindestens eines Monomers, das nicht (A), (B), (C), (D) ist, das mit letzteren copolymersierbar ist, für 100 Gew.-Teile der Monomere (A) + (B) + (C) + (D) .

11. Wässrige Polymerdispersion nach einem der Ansprüche 1 bis 10, **gekennzeichnet durch** die Tatsache, dass das Reaktionssystem, das zu deren Herstellung diente, zudem umfasst:
(F) bis zu 2 Gew.-Teile mindestens eines Reglers für 100 Gew.-Teile der Monomere (A) + (B) + (C) + (D).

12. Wässrige Polymerdispersion nach einem der Ansprüche 1 bis 11, **gekennzeichnet durch** die Tatsache, dass sie beinhaltet:
(G) 0,5 bis 5 Gew.-Teile mindestens eines anionischen oberflächenaktiven Mittels; und
(H) 0 bis 5 Gew.-Teile mindestens eines nicht ionischen oberflächenaktiven Mittels; und
wobei diese Mengen berechnet werden auf der Basis der Feststoff- oder Trockensubstanz und als Verhältnis zu 100 Gew.-Teilen der Monomere (A) + (B) + (C) + (D) der im endgültigen Latex verwendeten Gesamtzusammensetzung, ausgedrückt werden.

13. Wässrige Polymerdispersion nach einem der Ansprüche 1 bis 12, **gekennzeichnet durch** die Tatsache, dass die durchschnittliche Teilchengröße der Polymere, die in der vollständig oder teilweise polymerisierten Voremulsion vorhanden sind, kontrolliert wurde, damit 95 nm nicht überstiegen werden.

14. Wässrige Polymerdispersion nach einem der Ansprüche 1 bis 13, **gekennzeichnet durch** die Tatsache, dass sie **durch** ein Verfahren erhalten wurde, das die folgenden aufeinander folgenden Schritte umfasst:
(a) vollständige oder teilweise Vorpolymerisationsemulsion von 2 bis 20 Gew.-% der Gesamtzusammensetzung der Monomere (A) bis (E);
(b) kontinuierliche Zugabe von 40 bis 49 Gew.-% der Monomerzusammensetzung (A) bis (E) zur vollständig oder teilweise polymerisierten Voremulsion, über 45 bis 180 Minuten, und Fortsetzung der Emulsionspolymerisation über 0 bis 60 Minuten; und
(c) kontinuierliche Zugabe der verbleibenden 40 bis 49 Gew.-% der Monomerzusammensetzung (A) bis (E) zur Emulsion, die in Schritt (b) erhalten wurde, über 15 bis 120 Minuten, und Fortsetzung der Emulsionspolymerisation über 0 bis 60 Minuten,
wobei alle Monomerkomponenten in einer emulgierten Form eingeführt wurden.

15. Wässrige Polymerdispersion nach einem der Ansprüche 1 bis 14, **gekennzeichnet durch** die Tatsache, dass sie einem weiteren letzten Schritt (d) unterzogen wurde, bei dem mindestens ein nicht ionisches oberflächenaktives Mittel dem Endprodukt in einem Gesamtanteil, der von 0,2 bis 5 % reicht, im Verhältnis zur Gesamtsumme der Monomere zugegeben wird.

16. Wässrige Dispersion nach einem der Ansprüche 1 bis 15, **gekennzeichnet durch** die Tatsache, dass im Schritt der vollständigen oder teilweisen Vorpolymerisation mindestens ein nicht ionisches oberflächenaktives Mittel (H) mit mindestens einem anionischen oberflächenaktiven Mittel (G) kombiniert ist, wobei das nicht ionische oberflächenaktive Mittel (H) vorzugsweise zwischen 10 und 50 % der kumulierten Summe der oberflächenaktiven Mittel (G) und (H) in diesem Schritt darstellt.

17. Wässrige Polymerdispersion nach einem der Ansprüche 1 bis 16, **gekennzeichnet durch** die Tatsache, dass sie einer Nachbehandlung (c') mittels eines Initiatorsystems für freie Radikale unterzogen wurde, das eine kurze Halbwertszeit hat, um einen Restmonomeranteil zu erreichen, der 50 ppm nicht übersteigt.

18. Wässrige Polymerdispersion nach einem der Ansprüche 1 bis 17, **gekennzeichnet durch** die Tatsache, dass sie es erlaubt, bei einer nach 28 Tagen der Trocknung durchgeführten Messung auf einem Farbfilm, der 6 Gew.-% der Polymerzusammensetzung umfasst (berechnet anhand der Trockensubstanz), Waschbarkeitswerte, gemessen gemäß der DIN-Norm 53778, von mindestens 2400 Zyklen zu erreichen.

19. Herstellungsverfahren einer wässrigen Polymerdispersion, wie in einem der Ansprüche 1 bis 18 definiert, **gekennzeichnet durch** die Tatsache, dass:
(a) in einem ersten Schritt, in einen Reaktor 2 bis 20 Gew.-% der Monomerzusammensetzung (A) bis (E) eingeführt wird und eine vollständige oder teilweise Emulsionsvorpolymerisation durchgeführt wird, mit, im Falle einer teilweisen Vorpolymerisation, einem Gesamtanteil der Monomerkonversion von mindestens 50 % und bis zu unter 100 %,
(b) in einem zweiten Schritt, kontinuierlich 40 bis 49 % der Monomerzusammensetzung (A) bis (E) in einem Zeitraum zwischen 45 und 180 Minuten zugefügt werden und die Emulsionspolymerisation über 0 bis 60 Minuten fortgesetzt wird und
(c) in einem dritten Schritt, kontinuierlich die verbleibenden 40 bis 49 % der Monomerzusammensetzung (A) bis (E) in einem Zeitraum zwischen 15 und 120 Minuten zugefügt werden und die Emulsionspolymerisation über 0 bis 60 Minuten bis zum Abschluss fortgesetzt wird,
wobei alle Monomerkomponenten in einer emulgierten Form eingeführt werden.

20. Verfahren nach Anspruch 19, **gekennzeichnet durch** die Tatsache, dass in jedem der Schritte, mit der Monomerladung mindestens ein anionisches oberflächenaktives Mittel (G) eingeführt wird, das einen kumulierten Gesamtanteil von 0,5 bis 5 Gew.-% im Verhältnis zur Gesamtsumme der Monomere (A) bis (D) im Endprodukt darstellt.

21. Verfahren nach einem der Ansprüche 19 und 20, **gekennzeichnet durch** die Tatsache, dass mindestens ein nicht ionisches oberflächenaktives Mittel (H) nach dem Ende der Hauptemulsionspolymerisation zugefügt wird, wobei der Gesamtanteil im Verhältnis zu den Monomeren (A) bis (D) zwischen 0,2 und 5 % liegt.

22. Verfahren nach einem der Ansprüche 19 bis 21, **gekennzeichnet durch** die Tatsache, dass mindestens ein nicht ionisches oberflächenaktives Mittel (H) mit einem anionischen oberflächenaktiven Mittel (G) kombiniert wird, beim Schritt der vollständigen oder teilweisen Vorpolymerisation, wobei das nicht ionische oberflächenaktive Mittel (H) 10 bis 50 % der kumulierten oberflächenaktiven Mittel dieses Schritts darstellt, wobei das anionische oberflächenaktive Mittel (G) in diesem Schritt vorteilhafterweise bis etwa die Hälfte der gesamten Endmenge dieses anionischen oberflächenaktiven Mittels (G) darstellt.

23. Verfahren nach einem der Ansprüche 19 bis 22, **gekennzeichnet durch** die Tatsache, dass die vollständige oder teilweise Vorpolymerisation des ersten Schritts durchgeführt wird, wobei die Polymerpartikelgröße kontrolliert wird, um eine Voremulsion zu erhalten, die eine durchschnittliche Polymerteilchengröße aufweist, die 95 nm nicht übersteigt.

24. Verfahren nach einem der Ansprüche 19 bis 23, **gekennzeichnet durch** die Tatsache, dass der erste Schritt über 5 bis 45 Minuten bei einer Temperatur zwischen 70 und 85 °C durchgeführt wird.

25. Verfahren nach einem Ansprüche 19 bis 24, **gekennzeichnet durch** die Tatsache, dass der Rest der Monomere im zweiten und dritten Schritt bei einer Temperatur zwischen 65 und 75 °C zugefügt wird und dass die Polymerisation in jedem dieser Schritte durchgeführt wird, indem die Temperatur auf einen Wert zwischen 75 und 85 °C erhöht wird.

26. Verfahren nach einem der Ansprüche 19 bis 25, **gekennzeichnet durch** die Tatsache, dass drei Monomermischungen in den jeweils drei Schritten verwendet werden, von denen jede die gleichen Monomerverhältnisse wie die Zusammensetzung (A) + (B) + (C) + (D) + (E) aufweist oder mindestens zwei davon verschiedene Verhältnisse aufweisen.

27. Verfahren nach einem der Ansprüche 19 bis 26, **gekennzeichnet durch** die Tatsache, dass auf den dritten Schritt (c) ein Schritt (c') der Erwärmung der wässrigen Polymerdispersion über etwa 30 bis 90 Minuten bei einer Temperatur folgt, die bevorzugt mindestens 8 °C höher ist als die Polymerisationstemperatur.

28. Verwendung der wässrigen Polymerdispersion wie in einem der Ansprüche 1 bis 17 definiert, oder durch ein Verfahren hergestellt, wie in einem der Ansprüche 19 bis 27 definiert, in Schutz- und/oder Dekorationsanstrichen auf Substraten wie etwa Mauerwänden, Holz, Metallen, Plastikmaterialien, Verbundwerkstoffen und zwar für die Verwendung innen und außen und mehr bevorzugt für Schutz- und/oder Dekorationsfarben für diese Substrate zur Verwendung innen und/oder außen.

29. Farbzusammensetzung, die als Bindemittel mindestens eine wässrige Polymerdispersion umfasst, wie in einem der Ansprüche 1 bis 17 definiert, oder in einem Verfahren hergestellt, wie in einem der Ansprüche 18 bis 27 definiert.

30. Farbzusammensetzung nach Anspruch 29, **gekennzeichnet durch** die Tatsache, dass sie weder einen Weichmacher noch ein Koaleszenzmittel umfasst.

31. Farbzusammensetzung nach einem der Ansprüche 29 und 30, **gekennzeichnet durch** die Tatsache, dass sie mindestens 10 Gew.-% des Bindemittels enthält (berechnet anhand der Trockensubstanz).

32. Farbzusammensetzung nach einem der Ansprüche 29 bis 31, **gekennzeichnet durch** die Tatsache, dass sie bei einer nach 28 Tagen der Trocknung durchgeführten Messung auf einem Farbfilm, der 6 Gew.-% der Polymerzusammensetzung umfasst (berechnet anhand der Trockensubstanz) einen Waschbarkeitswert, gemessen gemäß der DIN-Norm 53778, von mindestens 2400 Zyklen besitzt.
